# EUROPEAN PATENT APPLICATION

(11) **EP 4 138 179 A1**
(43) Date of publication of application: **22.02.2023**
(21) Application number: 20931797.3
(22) Date of filing: 11.11.2020
(51) Int. Cl.: H01M 50/10

(54) **BATTERY PACK BOX, BATTERY PACK AND ELECTRIC VEHICLE**

(30) Priority: 24.04.2020 CN 202020637729 U
(71) Applicant: BYD Company Limited, Shenzhen, Guangdong 518118 (CN)
(72) Inventor: SUN, Huajun, Shenzhen, Guangdong 518118 (CN); LU, Zhipei, Shenzhen, Guangdong 518118 (CN); PENG, Qingbo, Shenzhen, Guangdong 518118 (CN); WAN, Long, Shenzhen, Guangdong 518118 (CN); ZHU, Yan, Shenzhen, Guangdong 518118 (CN)
(74) Representative: Hoffmann Eitle
(86) International application number: PCT/CN2020/128118
(87) International publication number: WO 2021/212815

(57) **Abstract**

The present disclosure provides a battery pack housing, a battery pack, and an electric vehicle. The battery pack housing includes a housing body and at least one structural beam inside the housing body, and the at least one structural beam divides the internal space of the housing body into a number of accommodation cavities. The housing body includes a top plate and a bottom plate arranged opposite to each other in a first direction, where the first direction is a height direction of the battery pack housing, the structural beam locates between the top plate and the bottom plate, and the at least one structural beam is attached to the top plate and the bottom plate. The battery pack housing is arranged with a mounting portion for a fixed connection with an external load. The battery pack housing disclosed in the present disclosure has relatively high strength and stiffness as well as high space utilization.

## Description

### CROSS-REFERENCE TO RELATED APPLICATIONS

The present disclosure claims priority to and benefits of Chinese Patent Application No. 202020637729.0, filed on April 24, 2020. The entire content of the above-referenced applications is incorporated herein by reference.

### FIELD

The present disclosure relates to the field of batteries, and more specifically, to a battery pack housing, a battery pack, and an electric vehicle.

### BACKGROUND

Conventional battery pack housings generally include a bottom plate and a top plate, and the bottom plate typically includes a base plate welded to a number of side beams. In addition, as a main load-bearing component of a battery pack, the bottom plate is usually welded with a number of cross beams and longitudinal beams inside in the manufacturing process thereof to ensure strength of the bottom plate. However, the design results in too many parts, a complicated structure, and inefficient space utilization of the battery pack housing, and the requirement of connecting the parts through welding leads to relatively high manufacturing costs. In addition, having too many welding joints of the battery pack housing causes a higher risk of failure in sealing the battery pack once a welding joint loses effectiveness, thereby impacting the service life of the battery pack.

### SUMMARY

A first aspect of the present disclosure provides a battery pack housing including a housing body and at least one structural beam inside the housing body. The at least one structural beam divides the internal space of the housing body into a number of accommodation cavities.

The housing body includes a top plate and a bottom plate arranged opposite to each other in a first direction, where the first direction is a height direction of the battery pack housing, the structural beam locates between the top plate and the bottom plate, and the at least one structural beam is attached to the top plate and the bottom plate.

The battery pack housing is arranged with a mounting portion for a fixed connection with an external load.

Beneficial effects of the present disclosure lie in that the battery pack housing disclosed in the present disclosure includes a structural beam between a top plate and a bottom plate, and the structural beam is attached to the top plate and the bottom plate. This arrangement of the structural beam, the top plate, and the bottom plate forms a "I"-shaped structure which has relatively high strength and stiffness, so that the requirements on load-bearing, impact resistance, crush resistance, etc. of the battery pack housing can be satisfied. In addition, the battery pack housing disclosed in the present disclosure relatively has a simple structure, low manufacturing costs, and high space utilization. Further, the structural beam divides the housing body into a number of accommodation cavities, so that when thermal runaway occurs in a cell assembly or an individual cell in one of the accommodation cavities, the other accommodation cavities are not impacted, thereby improving the safety of using the battery pack. In addition, when such a battery pack is mounted onto a whole vehicle, the structural strength of the battery pack can be taken as a part of the structural strength of the whole vehicle, so that the structural strength of the entire vehicle can be enhanced, which facilitates fulfilling the design requirement of the whole electric to be lightweight and reducing the costs of designing and manufacturing the whole vehicle.

In some embodiments of the present disclosure, the length of the accommodation cavities in a second direction is greater than 500 mm, and the second direction is a width direction of the battery pack housing, or the second direction is a length direction of the battery pack housing.

In some embodiments of the present disclosure, there are a number of the structural beams, lengths of the structural beams extend in a second direction, a number of the structural beams are spaced in a third direction, and each of the structural beams is attached to the top plate and the bottom plate. The second direction is a length direction of the battery pack housing, and the third direction is a width direction of the battery pack housing; or, the second direction is a width direction of the battery pack housing, and the third direction is a length direction of the battery pack housing.

In some embodiments of the present disclosure, the housing body is integrally formed with the structural beams.

In some embodiments of the present disclosure, the housing body further includes a first frame and a second frame on two sides of the housing body in a third direction, and the third direction is a width direction of the battery pack housing, or the third direction is a length direction of the battery pack housing.

In some embodiments of the present disclosure, at least one of the first frame and the second frame has a cavity inside, reinforcement plates are arranged in the cavity, and the reinforcement plates divide the cavity into a number of sub-cavities.

In some embodiments of the present disclosure, the mounting portion is arranged on the first frame and the second frame.

In some embodiments of the present disclosure, the battery pack housing further includes an end plate, a first opening is arranged at an end of the housing body in a second direction, the end plate seals up the first opening, and the second direction is a width direction of the battery pack housing, or the second direction is a length direction of the battery pack housing.

In some embodiments of the present disclosure, the first opening is arranged in the second direction at both ends of the housing body; and the end plate includes a third frame and a fourth frame, where the third frame and the fourth frame are sealingly connected to the housing body to seal up the corresponding first opening.

In some embodiments of the present disclosure, the housing body, the third frame, and the fourth frame are metal pieces and are sealingly connected by welding.

In some embodiments of the present disclosure, the battery pack housing further includes a sealing plate, a second opening is arranged at an end of the accommodation cavities in the second direction, the sealing plate is arranged inside the end plate, and the sealing plate occludes a portion that is of the second opening and that is adjacent to the bottom plate.

In some embodiments of the present disclosure, the battery pack housing further includes a sealing plate, a second opening is arranged at an end of the accommodation cavities in the second direction, the sealing plate is arranged inside the end plate, and the sealing plate completely occludes the second opening.

In some embodiments of the present disclosure, a recess recessed away from the end plate is arranged at an end of the at least one structural beam in the second direction.

In some embodiments of the present disclosure, a heat dissipation channel is arranged in the at least one structural beam, the heat dissipation channel extends in a second direction, and the second direction is a width direction of the battery pack housing, or the second direction is a length direction of the battery pack housing.

In some embodiments of the present disclosure, each of the structural beams includes a first side plate and a second side plate arranged at intervals in a third direction, the first side plate, the second side plate, the top plate, and the bottom plate collectively define the heat dissipation channel, the second direction is a width direction of the battery pack housing, and the third direction is a length direction of the battery pack housing; or, the second direction is a length direction of the battery pack housing, and the third direction is a width direction of the battery pack housing.

In some embodiments of the present disclosure, the structural beam further includes a partition plate connected to both the first side plate and the second side plate, and the partition plate divides the heat dissipation channel into a number of sub-channels.

In some embodiments of the present disclosure, the battery pack housing is arranged with an adhesive application hole, and each of the accommodation cavities is in a corresponding communication with the at least one adhesive application hole.

In some embodiments of the present disclosure, the battery pack housing is a sealed housing, and an air pressure inside the accommodation cavities is lower than an air pressure outside the battery pack housing.

In some embodiments of the present disclosure, the pressure inside the accommodation cavities is -40 KPa to -70 KPa.

In some embodiments of the present disclosure, the battery pack housing is arranged with an exhaust orifice.

In some embodiments of the present disclosure, the battery pack housing is arranged with a number of exhaust orifices, and a number of the exhaust orifices are in a corresponding communication with a number of the accommodation cavities respectively.

In some embodiments of the present disclosure, a number of the accommodation cavities are in a communication with each other, and the battery pack housing is arranged with at least one exhaust orifice that is in a communication with the accommodation cavities.

A second aspect of the present disclosure provides a battery pack including the battery pack housing according to any one of above described.

A third aspect of the present disclosure provides an electric vehicle including an external load and the battery pack described above that is fixed to the external load.

Additional aspects and advantages of the present disclosure are partially provided in the following description, and partially become apparent in the following description or understood through the practice of the present disclosure.

### BRIEF DESCRIPTION OF THE DRAWINGS

FIG. 1 is a schematic diagram of a structure of a battery pack according to an embodiment of the present disclosure;
FIG. 2 is an exploded view of a battery pack housing according to an embodiment of the present disclosure;
FIG. 3 is a partial enlarged view of A shown in FIG. 2;
FIG. 4 is a partial enlarged view of B shown in FIG. 2; and
FIG. 5 is a schematic diagram of a structure of an electric vehicle according to an embodiment of the present disclosure.

### Reference signs:

100: battery pack; 200: battery pack housing; and 300: electric vehicle;
10: housing body; 101: top plate; 102: bottom plate; 103: first frame; 1031: first frame part; 1032: second frame part; 104: second frame; 1041: third frame part; 1042: fourth frame part; 105: reinforcement plate; 106: sub-cavity; 107: third frame; 108: fourth frame; 109: adhesive application hole; 110: exhaust orifice; 111: cavity; 112: end plate; and 113: first opening;
20: structural beam; 201: recess; 202: heat dissipation channel; 203: first side plate; 204: second side plate; and 205: partition plate;
30: accommodation cavity; and
40: mounting portion; and 401: mounting hole.

### DETAILED DESCRIPTION

Embodiments of the present disclosure are described in detail below, and examples of the embodiments are shown in accompanying drawings, where the same or similar elements or the elements having same or similar functions are denoted by the same or similar reference numerals throughout the description. The embodiments that are described with reference to the accompanying drawings are exemplary, and are only used to interpret the present disclosure, instead limiting the present disclosure.

In the description of the present disclosure, it should be understood that, orientations or position relationships indicated by terms such as "center", "longitudinal", "transverse", "length", "width", "thickness", "up", "down", "front", "back", "left", "right", "vertical", "horizontal", "top", "bottom", "inner", "outer", "axial", "radial", and "circumferential" are orientations or position relationship shown based on the accompanying drawings, and are merely used for describing the present disclosure and simplifying the description, rather than indicating or implying that the apparatus or element should have a particular orientation or be constructed and operated in a particular orientation, and therefore, should not be construed as a limitation to the present disclosure.

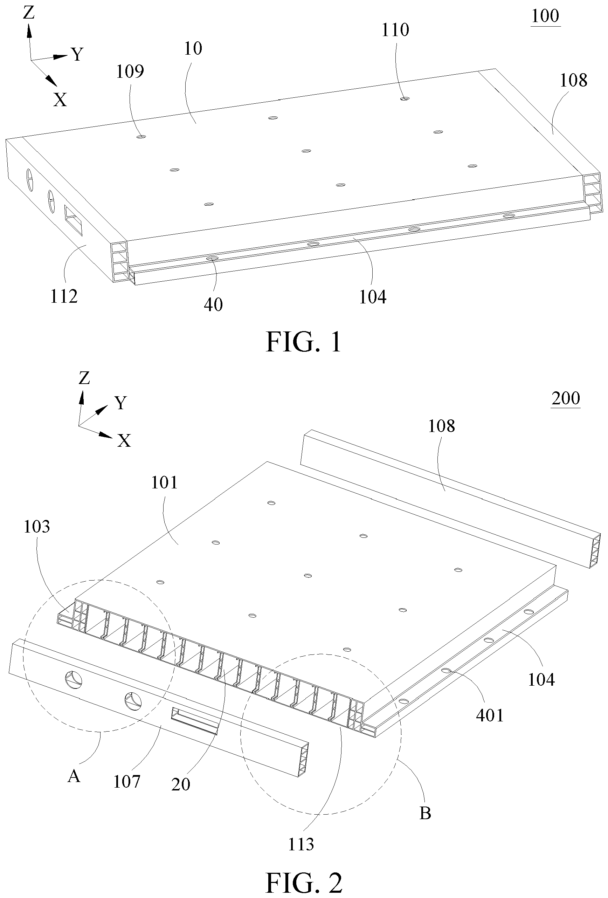

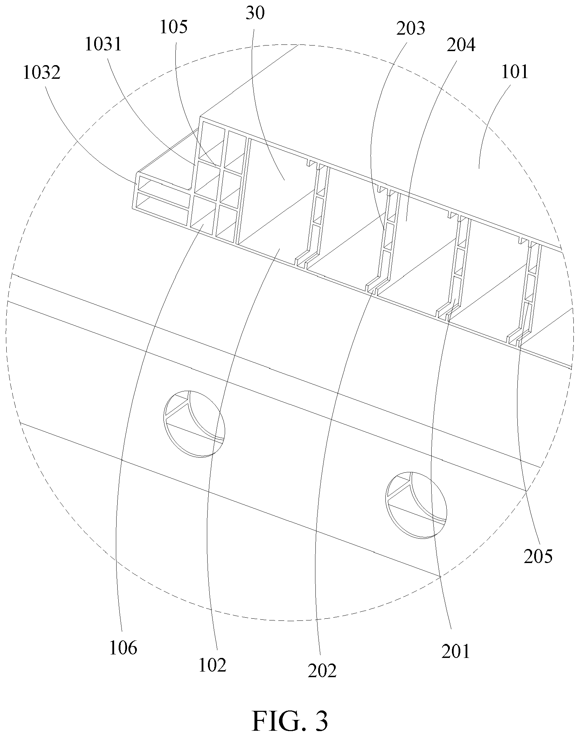

As shown in FIG. 1 to FIG. 3, the present disclosure provides a battery pack housing 200 including a housing body 10 and at least one structural beam 20 inside the housing body 10, and the at least one structural beam 20 divides the internal space of the housing body 10 into a number of accommodation cavities 30. The housing body 10 includes a top plate 101 and a bottom plate 102 arranged opposite to each other in a first direction, where the first direction is a height direction of the battery pack housing 200, the structural beam 20 locates between the top plate 101 and the bottom plate 102, and the at least one structural beam 20 is attached to the top plate 101 and the bottom plate 102. The battery pack housing 200 is arranged with a mounting portion 40 for a fixed connection with an external load. The first direction is the direction of a Z-axis in the figure.

The battery pack housing 200 disclosed in the present disclosure includes the structural beam 20 between the top plate 101 and the bottom plate 102, and the structural beam 20 is attached to the top plate 101 and the bottom plate 102. This arrangement of the structural beam 20, the top plate 101, and the bottom plate 102 forms a "I"-shaped structure which has relatively high strength and stiffness, so that the requirements on load-bearing, impact resistance, crush resistance, etc. of the battery pack housing 200 can be satisfied. In addition, the battery pack housing 200 disclosed in the present disclosure relatively has a simple structure, low manufacturing costs, and high space utilization. Further, the structural beam 20 divides the housing body 10 into a number of the accommodation cavities 30, so that when thermal runaway occurs in a cell assembly or an individual cell in one of the accommodation cavities 30, the other accommodation cavities 30 are not impacted, thereby improving the safety of using the battery pack 100. In addition, when such a battery pack 100 is mounted onto a whole vehicle, the structural strength of the battery pack 100 can be taken as a part of the structural strength of the whole vehicle, so that the structural strength of the entire vehicle can be enhanced, which facilitates fulfilling the design requirement of the whole electric to be lightweight and reducing the costs of designing and manufacturing the whole vehicle.

It should be noted that the battery pack housing 200 disclosed in the present disclosure refers to a housing of the battery pack 100 for accommodating a cell assembly, an individual cell, or the like. Through the mounting portion 40 thereon, the battery pack housing 200 is fixed to an external load in a detachable or non-detachable connection, and thus does not refer to a battery case for a battery module or an individual cell. Generally, the battery pack 100 further includes at least one of a battery management system (BMS), a battery connector, a battery sampler, and a battery thermal management system.

The cell assembly includes an encapsulation film and at least one electrode core encapsulated by using the encapsulation film. The electrode core is a commonly used electrode core in the field of traction batteries, and can be an electrode core made by winding or an electrode core made by stacking. Generally, the electrode core includes at least a positive plate, a membrane, and a negative plate.

In addition, that the structural beam 20 is attached to the top plate 101 and the bottom plate 102 can be understood as that the top plate 101, the bottom plate 102, and the structural beam 20 are integrally formed with one another. Alternatively, one of the top plate 101 and the bottom plate 102 is integrally formed with the structural beam 20, and the other is welded to the structural beam 20. Alternatively, one end of the structural beam 20 is welded to the bottom plate 102, and the other end of the structural beam 20 is welded to the top plate 101.

In one embodiment, as shown in FIG. 2, a length of the accommodation cavities 30 in a second direction is greater than 500 mm. According to some embodiments of the present disclosure, the length of the accommodation cavities 30 in the second direction is 500 mm to 2,500 mm. The second direction is different from the first direction, and the second direction is the direction of a Y-axis in the figure. The size of the accommodation cavities 30 allows the battery pack 100 to meet the requirements for a relatively large capacity and relatively high space utilization.

According to some embodiments of the present disclosure, the length of the accommodation cavities 30 in the second direction is 1,000 mm to 2,000 mm.

According to some embodiments of the present disclosure, the length of the accommodation cavities 30 in the second direction is 1,300 mm to 2,200 mm.

In this embodiment, the second direction is a width direction of the battery pack housing 200, or the second direction is a length direction of the battery pack housing 200.

In one embodiment, as shown in FIG. 2 to FIG. 3, there are a number of structural beams 20, lengths of the structural beams 20 extend in a second direction, a number of the structural beams 20 are spaced in a third direction, and each of the structural beams 20 is attached to a top plate 101 and a bottom plate 102. The first direction, the second direction, and the third direction are different from each other, and the third direction is the direction of an X-axis in the figure.

In one embodiment, a housing body 10 and the structural beams 20 are integrally formed with each other. This arrangement not only allows a simple manufacturing process, which reduces the production costs, but also ensures sufficient structural strength and stiffness of the housing body, so as to meet the requirements on load-bearing, impact resistance and crush resistance of the housing body.

Specifically, the top plate 101, the bottom plate 102, and the structural beams 20 are integrally formed with one another.

In one embodiment, the second direction is a length direction of the battery pack housing 200, and the third direction is a width direction of the battery pack housing 200; or the second direction is a width direction of the battery pack housing 200, and the third direction is a length direction of the battery pack housing 200.

It can be understood that, as each of the structural beams 20 is attached to the top plate 101 and the bottom plate 102, each structural beam 20, the top plate 101, and the bottom plate 102 form a "I"-shaped structure which has relatively high strength and stiffness, so that the requirements on load-bearing, impact resistance, crush resistance, etc. of the battery pack housing 200 can be satisfied. Moreover, the battery pack housing 200 relatively has a simple structure and high space utilization. In addition, the housing body 10 and the structural beams 20 are integrally formed with each other, and the manufacturing thereof is simple, so that the production costs can be reduced. When such a battery pack 100 is mounted onto a whole vehicle, the structural strength of the battery pack 100 can be taken as a part of the structural strength of the whole vehicle, so that the structural strength of the entire vehicle can be enhanced, which facilitates fulfilling the design requirement of the whole electric to be lightweight and reducing the costs of designing and manufacturing the whole vehicle.

In one embodiment, as shown in FIG. 2 to FIG. 4, the housing body 10 further includes a first frame 103 and a second frame 104 on two sides of the housing body 10 in a third direction, and the third direction is a width direction of the battery pack housing 200, or the third direction is a length direction of the battery pack housing 200. The third direction is the direction of an X-axis in the figure.

In some embodiments, the housing body 10 includes a top plate 101 and a bottom plate 102 arranged opposite to each other in a first direction and a first frame 103 and a second frame 104 arranged opposite to each other in a third direction. The top plate 101, the first frame 103, the bottom plate 102, and the second frame 104 are connected.

It can be understood that the top plate 101, the first frame 103, the bottom plate 102, and the second frame 104 collectively define an accommodation space. The structural beams 20 are in the accommodation space. According to some embodiments of the present disclosure, the top plate 101, the first frame 103, the bottom plate 102, and the second frame 104 are integrally formed with one another, and this arrangement can ensure relatively high structural strength of the housing body 10, while the manufacturing is relatively simple, thereby helping reduce the production costs. Clearly, in other embodiments, the first frame 103 and the second frame 104 may be connected to the top plate 101 and the bottom plate 102 through an intermediate plate. Alternatively, one end of the first frame 103 is welded to the top plate 101, and the other end of the first frame 103 is welded to the bottom plate 102. Similarly, one end of the first frame 103 is welded to the top plate 101, and the other end of the first frame 103 is welded to the bottom plate 102.

In one embodiment of the present disclosure, the top plate 101, the first frame 103, the bottom plate 102, the second frame 104, and the structural beams 20 are integrally formed with one another, for example, by integrated aluminum extrusion. This not only ensures the relatively high structural strength of the battery pack housing 200, but also simplifies the manufacturing to reduce the processing costs. Clearly, in other embodiments, the top plate 101, the bottom plate 102, and the structural beams 20 are integrally formed with one another as one piece. Then, the first frame 103 is welded to the top plate 101 and the bottom plate 102, and the second frame 104 is welded to the top plate 101 and the bottom plate 102.

In some embodiments, the first direction is a height direction of the battery pack housing 200, the second direction is one of a width direction and a length direction of the battery pack housing 200, and the third direction is the other of the width direction and the length direction of the battery pack housing 200. In other words, the second direction is a width direction of the battery pack housing 200, and the third direction is a length direction of the battery pack housing 200; or the second direction is a length direction of the battery pack housing 200, and the third direction is a width direction of the battery pack housing 200.

In this embodiment of the present disclosure, the second direction is a width direction of the battery pack housing 200 and is parallel to a width direction of an electric vehicle 300. The third direction is a length direction of the battery pack housing 200 and is parallel to a length direction of the electric vehicle 300.

Clearly, in other embodiments, the second direction may be parallel to the length direction of the electric vehicle 300, and the third direction may be parallel to the width direction of the electric vehicle 300.

According to some embodiments of the present disclosure, as shown in FIG. 2 to FIG. 4, at least one of the first frame 103 and the second frame 104 has a cavity 111 inside. Reinforcement plates 105 are arranged in the cavity 111, and the reinforcement plates 105 divide the cavity 111 into a number of sub-cavities 106. This arrangement can ensure that the first frame 103 and the second frame 104 have specific strength, which helps improve the strength of the battery pack 100 to resist being impacted or crushed.

In one embodiment, as shown in FIG. 1 and FIG. 2, the first frame 103 and the second frame 104 are arranged with a mounting portion 40 for a fixed connection with an external load. Clearly, in other embodiments, the mounting portion 40 may be arranged on the top plate 101 or the bottom plate 102.

In one embodiment, as shown in FIG. 1 and FIG. 2, the mounting portion 40 is mounting holes 401 arranged on the first frame 103 and the second frame 104. The mounting holes 401 are used for getting fasteners (such as bolts or rivets) through to fix the battery pack 100 to an external load.

In some embodiments, the mounting holes 401 on the first frame 103 is distributed all over the first frame 103 in a first direction, and the mounting holes 401 on the second frame 104 is distributed all over the second frame 104 in a first direction. However, an axial direction of the mounting holes 401 may alternatively be arranged with an included angle, for example, 5 degrees or 10 degrees, relative to the first direction.

According to some embodiments of the present disclosure, there are a number of mounting holes 401, and the mounting holes 401 on the first frame 103 are arranged one by one in order in a length direction of the first frame 103. The length direction of the first frame 103 is parallel to the second direction.

Similarly, the mounting holes 401 on the second frame 104 are arranged one by one in order in a length direction of the second frame 104. The length direction of the second frame 104 is parallel to the second direction.

Clearly, in another embodiment, the mounting portion 40 is rings arranged on the first frame 103 and the second frame 104. The rings are fixedly connected to an external load, to fixedly connect the battery pack 100 to the external load.

However, in another embodiment, the mounting portion 40 is mounting blocks arranged on the first frame 103 and the second frame 104. The mounting blocks is fixed to an external load by welding. Clearly, the mounting blocks may alternatively be fixed to the external load by using adhesive or by clamping.

In one embodiment, as shown in FIG. 2 to FIG. 4, the first frame 103 includes a first frame part 1031 and a second frame part 1032, and the second frame 104 includes a third frame part 1041 and a fourth frame part 1042. The first frame part 1031 and the third frame part 1041 are arranged opposite to each other in a second direction and are connected to the top plate 101 and the bottom plate 102. The second frame part 1032 is on one side of the first frame part 1031 that is farther from the third frame part 1041, and the fourth frame part 1042 is on one side of the third frame part 1041 farther from the first frame part 1031. The mounting portion 40 is arranged on the second frame part 1032 and the fourth frame part 1042.

According to some embodiments of the present disclosure, the first frame part 1031 is perpendicular to the second frame part 1032, forming an L-shaped structure. This arrangement helps enhance the structural strength of the first frame 103. The third frame part 1041 is perpendicular to the fourth frame part 1042, forming an L-shaped structure. This arrangement helps enhance the structural strength of the second frame 104. However, the first frame part 1031 and the second frame part 1032, as well as the third frame part 1041 and the fourth frame part 1042 may be arranged with another included angle, for example, 70 degrees or 80 degrees.

In one embodiment, as shown in the figure, the battery pack housing 200 further includes an end plate 112, a first opening 113 is arranged at an end of the housing body 10 in a second direction, the end plate 112 seals up the first opening 113, and the second direction is a width direction of the battery pack housing 200, or the second direction is a length direction of the battery pack housing 200.

It can be understood that a cell assembly or an individual cell may be mounted inside the accommodation cavities 30 through the first opening 113, and the manner is easy for operation. In addition, electrodes of the cell assembly or individual cell inside the accommodation cavities 30 can be led out through the first opening 113 while ensuring relatively high structural strength of the battery pack housing 200.

According to some embodiments of the present disclosure, the first opening 113 is arranged in the second direction at both ends of the housing body 10; and the end plate 112 includes a third frame 107 and a fourth frame 108. The third frame 107 and the fourth frame 108 are sealingly connected to the housing body 10 to seal up the corresponding first opening 113.

It can be understood that when the first opening 113 is arranged in the second direction at both ends of the housing body 10, the electrodes of the cell assembly or the individual cell inside the accommodation cavities 30 can be led out through the two first openings 113 respectively.

According to some embodiments of the present disclosure, the housing body 10, the third frame 107, and the fourth frame 108 are metal pieces and are sealingly connected by welding.

However, in other embodiments, the housing body 10, the third frame 107, and the fourth frame 108 may be made of plastic. In addition, the third frame 107 and the fourth frame 108 may be sealingly connected to the housing body 10 by using adhesive or by clamping.

According to some embodiments of the present disclosure, as shown in FIG. 2 to FIG. 4, the third frame 107 and the fourth frame 108 are hollow inside. Reinforcement plates 105 are arranged in the third frame 107 and the fourth frame 108, and the reinforcement plates 105 divide the internal spaces of the third frame 107 and the fourth frame 108 into a number of sub-cavities 106. This arrangement can ensure that the third frame 107 and the fourth frame 108 have specific strength, which helps improve the strength of the battery pack housing 200 to resist being impacted or crushed.

In one embodiment, the battery pack housing 200 further includes a sealing plate, a second opening is arranged at an end of the accommodation cavities 30 in the second direction, where the sealing plate is arranged inside the end plate 112. The sealing plate is connected to the structural beams 20 and the housing body 10 to block off a portion that is of the second opening of the accommodation cavities 30 and that is adjacent to the bottom plate 102. To be specific, the second opening of the accommodation cavities 30 is half blocked-off by using the sealing plate, so that when the accommodation cavities 30 accommodate an electrode core assembly encapsulated by using an encapsulation film, unexpected breakage of the encapsulation film can be prevented to cause a flow of electrolyte from one accommodation cavity 30 to another accommodation cavity 30 which leads to an internal short circuit, thereby improving the safety of using the battery pack 100.

The half blockage of the second opening of an accommodation cavity 30 that is in a number of the accommodation cavities 30 and that is at either end may be that the sealing plate is connected to the first frame 103, the bottom plate 102, and the structural beams 20, or that the sealing plate is connected to the second frame 104, the bottom plate 102, and the structural beams 20, to block off a portion that is of the second opening of the accommodation cavity 30 and that is adjacent to the bottom plate 102.

The half blockage of the second opening of another accommodation cavity 30 in a number of the accommodation cavities 30 may be that the sealing plate is connected to the bottom plate 102 and two adjacent structural beams 20, to block off a portion that is of the second opening of the accommodation cavity 30 and that is adjacent to the bottom plate 102.

In one embodiment, as shown in the figure, the battery pack housing 200 further includes a sealing plate, a second opening is arranged at an end of the accommodation cavities 30 in the second direction, where the sealing plate is arranged inside the end plate 112. The sealing plate is connected to the structural beams 20 and the housing body 10 to completely block off the second opening of the accommodation cavities 30. That is, the second opening of the accommodation cavities 30 is completely blocked off by using the sealing plate, so that the safety of using the battery pack 100 is improved.

The complete blockage of the second opening of an accommodation cavity 30 that is in a number of the accommodation cavities 30 and that is at either end may be that the sealing plate is connected to the first frame 103, the structural beams 20, the top plate 101, and the bottom plate 102, or that the sealing plate is connected to the second frame 104, the structural beams 20, the top plate 101, and the bottom plate 102, to completely block off the second opening of the accommodation cavity 30.

The complete blockage of the second opening of another accommodation cavity 30 in a number of the accommodation cavities 30 may be that the sealing plate is connected to the bottom plate 102, the top plate 101, and two adjacent structural beams 20, to completely block off the second opening of the accommodation cavity 30.

In one embodiment, as shown in FIG. 1 and FIG. 2, a recess 201 recessed away from the end plate 112 is arranged at an end of the at least one structural beam 20 in the second direction.

The structural design of the recess 201 can be used for accommodating an insulation protection frame, an electrical connector, etc., and this structural design does not increase the length of the battery pack housing 200 in the second direction, which helps reduce the size of the battery pack housing 200.

According to some embodiments of the present disclosure, each structural beam 20 is arranged with the recess 201 at either end in the second direction, where the recess 201 adjacent to the third frame 107 draws back from the third frame 107, and the recess 201 adjacent to the fourth frame 108 draws back from the fourth frame 108.

In one embodiment, as shown in FIG. 2 to FIG. 4, a heat dissipation channel 202 is arranged in the at least one structural beam 20. The heat dissipation channel 202 extends in a second direction, and the second direction is a width direction of the battery pack housing 200, or the second direction is a length direction of the battery pack housing 200. In this way, after getting into the heat dissipation channel 202, the heat from the cell assembly or the individual cell accommodated in the accommodation cavities 30 can be transferred to the outside of the battery pack housing 200 via the top plate 101 and the bottom plate 102. This structural design in the present disclosure provides a larger heat dissipation space inside the battery pack housing 200 when compared with a solid-structure design of the structural beam 20, thereby helping improve the cooling and heat dissipation effects.

In one embodiment, as shown in FIG. 2 to FIG. 4, each structural beam 20 includes a first side plate 203 and a second side plate 204 arranged at intervals in a third direction, the first side plate 203, the second side plate 204, the top plate 101, and the bottom plate 102 collectively define the heat dissipation channel 202, the second direction is a width direction of the battery pack housing 200, and the third direction is a length direction of the battery pack housing 200; or, the second direction is a length direction of the battery pack housing 200, and the third direction is a width direction of the battery pack housing 200.

That is, the space surrounded by the first side plate 203, the second side plate 204, the top plate 101, and the bottom plate 102 is the heat dissipation channel 202. In this way, the heat dissipation channel 202 can be formed simply by utilizing the structure of the housing body 10 and the structural beam 20 without an additional heat dissipation pipe, thereby helping simplify the structural design of the battery pack 100 and reduce the production costs.

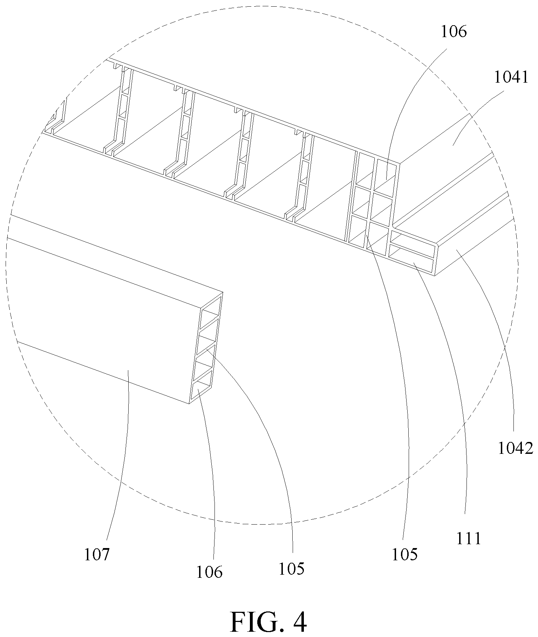

In one embodiment, as shown in FIG. 2 and FIG. 4, the structural beam 20 further includes a partition plate 205 connected to both the first side plate 203 and the second side plate 204, and the partition plate 205 divides the heat dissipation channel 202 into a number of sub-channels. This arrangement can bring better cooling and heat dissipation effects of the battery pack housing 200, and at the same time can ensure specific strength of the structural beam 20, thereby helping improve of the overall strength of the battery pack 100.

In one embodiment, as shown in FIG. 1 and FIG. 2, the battery pack housing 200 is arranged with an adhesive application hole 109, and each of the accommodation cavities 30 is in a corresponding communication with the at least one adhesive application hole 109. It can be understood that a structural adhesive can be injected into the battery pack housing 200 through the adhesive application hole 109 to fixedly connect the cell assembly or the individual cell accommodated in the accommodation cavities 30 to the battery pack housing 200, thereby improving the structural strength of the battery pack 100.

In one embodiment, the battery pack housing 200 is a sealed housing, and an air pressure inside the accommodation cavities 30 is lower than an air pressure outside the battery pack housing 200. This arrangement allows a vacuum-pumping operation to get the air pressure inside the accommodation cavities 30 lower than the air pressure outside the battery pack housing 200, which can reduce an existing amount of substances such as water vapor inside the battery pack housing 200, so as to prevent aging, damage, etc. of a component, for example, the cell assembly or the cell, inside the battery pack housing 200 due to a long-term effect of water vapor, thereby helping prolong the service life of the battery pack 100. In addition, the sealed housing may further function as a secondary seal.

In one embodiment, the pressure inside the accommodation cavities 30 is -40 KPa to -70 KPa. This arrangement can ensure that an existing amount of substances such as water vapor and oxygen inside the battery pack housing 200 is reduced, so as to prevent aging of the cell assembly or various other components inside the battery pack housing 200 due to a long-term effect of water vapor and oxygen, thereby helping prolong the service life of the cell assembly or various other components inside the battery pack housing 200.

In one embodiment, as shown in FIG. 1 and FIG. 2, the battery pack housing 200 is arranged with an exhaust orifice 110. An operation of vacuum-pumping from inside the battery pack housing 200 through the exhaust orifice 110 can reduce an existing amount of substances such as water vapor inside the battery pack housing 200, so as to prevent aging, damage, etc. of a component, for example, the cell assembly or the cell, inside the battery pack housing 200 due to a long-term effect of water vapor, thereby helping prolong the service life of the battery pack 100.

In one embodiment, as shown in FIG. 1 and FIG. 2, the battery pack housing 200 is arranged with a number of exhaust orifices 110, and a number of the exhaust orifices 110 are in a corresponding communication with a number of the accommodation cavities 30. This arrangement helps enhance the efficiency of the vacuum-pumping operation and reduce the production costs.

In one embodiment, as shown in FIG. 1 and FIG. 2, a number of the accommodation cavities 30 are in a communication with each other, and the battery pack housing 200 is arranged with at least one exhaust orifice 110 that is in a communication with the accommodation cavities 30. In this way, an operation of vacuum-pumping from a number of the accommodation cavities 30 at the same time through the exhaust orifice 110 can be performed.

It should be noted that a type of the communication with the accommodation cavities 30 is not specifically limited. For example, the accommodation cavities 30 may achieve the communication through the first opening 113 at the end. Alternatively, the structural beam 20 is arranged with a through hole that communicates two adjacent accommodation cavities 30.

According to some embodiments of the present disclosure, as shown in FIG. 1, the top plate 101 is arranged with the adhesive application hole 109 or the exhaust orifice 110 or the adhesive application hole 109 and the exhaust orifice 110. However, in other embodiments, it may be that the bottom plate 102, the first frame 103, or the second frame 104 is arranged with the adhesive application hole 109 or the exhaust orifice 110 or the adhesive application hole 109 and the exhaust orifice 110.

Further, a manner of sealing the exhaust orifice 110 is not specifically limited. For example, the exhaust orifice 110 may be sealed by a sealing member or may be sealed by using a potting adhesive.

It should be noted that the adhesive application hole 109 and the exhaust orifice 110 may be the same hole or different holes. In the case in which the two holes are the same holes, it may be that a potting adhesive is used and then vacuum-pumping is performed.

Another aspect of the present disclosure provides a battery pack 100 including the battery pack housing 200 described above. The battery pack 100 provided in the present disclosure has relatively high structural strength and stiffness, relatively high space utilization, as well as relatively high safety in use.

In still another aspect, the present disclosure further provides an electric vehicle 300 including a vehicle body and the battery pack 100 described above, and the battery pack 100 is fixed to the vehicle body through the mounting portion 40.

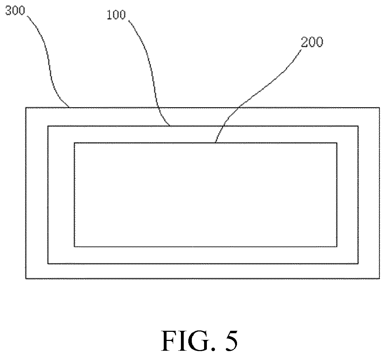

According to the electric vehicle 300 (see FIG. 5) provided in the present disclosure, when the battery pack 100 having relatively high strength is mounted onto a whole vehicle, the structural strength of the battery pack 100 can be taken as a part of the structural strength of the whole vehicle, so that the structural strength of the entire vehicle can be enhanced, which facilitates fulfilling the design requirement of the whole electric to be lightweight and reducing the costs of designing and manufacturing the whole vehicle.

In the description of the present disclosure, it should be noted that unless otherwise explicitly specified or defined, the terms such as "mount", "install", "connect", and "connection" should be understood in a broad sense. For example, the connection may be a fixed connection, a detachable connection, or an integral connection; or the connection may be a mechanical connection or an electrical connection; or the connection may be a direct connection, an indirect connection through an intermediary, or internal communication between two components. A person of ordinary skill in the art may understand the specific meanings of the foregoing terms in the present disclosure according to specific situations.

In description of this specification, description of reference terms such as "an embodiment", "specific embodiments", or "an example", means including specific features, structures, materials, or features described in this embodiment or example in at least one embodiment or example of the present disclosure. In this specification, schematic descriptions of the foregoing terms do not necessarily point at a same embodiment or example. Moreover, the specific features, structures, materials, or characteristics described may be combined in any one or more embodiments or examples in an appropriate manner.

Although the embodiments of the present disclosure have been shown and described, persons of ordinary skill in the art should understand that various changes, modifications, replacements and variations may be made to the embodiments without departing from the principles and spirit of the present disclosure, and the scope of the present disclosure is as defined by the appended claims and their equivalents.

## Claims

1. A battery pack housing, comprising a housing body and at least one structural beam inside the housing body, wherein the at least one structural beam divides the internal space of the housing body into a plurality of accommodation cavities;
the housing body comprises a top plate and a bottom plate arranged opposite to each other in a first direction, the first direction is a height direction of the battery pack housing, the structural beam locates between the top plate and the bottom plate, and the at least one structural beam is attached to the top plate and the bottom plate;
the battery pack housing is arranged with a mounting portion for a fixed connection with an external load.

2. The battery pack housing according to claim 1, wherein the length of the accommodation cavities in a second direction is greater than 500 mm, and the second direction is a width direction of the battery pack housing, or the second direction is a length direction of the battery pack housing.

3. The battery pack housing according to claim 1, wherein there are a plurality of the structural beams, lengths of the structural beams extend in a second direction, the plurality of structural beams are spaced in a third direction, each of the structural beams is attached to the top plate and the bottom plate, the second direction is a length direction of the battery pack housing, and the third direction is a width direction of the battery pack housing; or, the second direction is a width direction of the battery pack housing, and the third direction is a length direction of the battery pack housing.

4. The battery pack housing according to claim 1, wherein the housing body is integrally formed with the structural beams.

5. The battery pack housing according to claim 1, wherein the housing body comprises a first frame and a second frame on two sides of the housing body in a third direction, and the third direction is a width direction of the battery pack housing, or the third direction is a length direction of the battery pack housing.

6. The battery pack housing according to claim 5, wherein at least one of the first frame and the second frame has a cavity inside, reinforcement plates are arranged in the cavity, and the reinforcement plates divide the cavity into a plurality of sub-cavities.

7. The battery pack housing according to claim 5, wherein the mounting portion is arranged on the first frame and the second frame.

8. The battery pack housing according to claim 5, wherein the battery pack housing further comprises an end plate, a first opening is arranged at an end of the housing body in a second direction, the end plate seals up the first opening, and the second direction is a width direction of the battery pack housing, or the second direction is a length direction of the battery pack housing.

9. The battery pack housing according to claim 8, wherein the first opening is arranged in the second direction at both ends of the housing body; and the end plate comprises a third frame and a fourth frame, wherein the third frame and the fourth frame are sealingly connected to the housing body to seal up the corresponding first opening.

10. The battery pack housing according to claim 9, wherein the housing body, the third frame, and the fourth frame are metal pieces and are sealingly connected by welding.

11. The battery pack housing according to claim 8, wherein the battery pack housing further comprises a sealing plate, a second opening is arranged at an end of the accommodation cavities in the second direction, the sealing plate is arranged inside the end plate, and the sealing plate occludes a portion that is of the second opening and that is adjacent to the bottom plate.

12. The battery pack housing according to claim 8, wherein the battery pack housing further comprises a sealing plate, a second opening is arranged at an end of the accommodation cavities in the second direction, the sealing plate is arranged inside the end plate, and the sealing plate completely occludes the second opening.

13. The battery pack housing according to claim 8, wherein a recess recessed away from the end plate is arranged at an end of the at least one structural beam in the second direction.

14. The battery pack housing according to any one of claims 1 to 13, wherein a heat dissipation channel is arranged in the at least one structural beam, the heat dissipation channel extends in a second direction, and the second direction is a width direction of the battery pack housing, or the second direction is a length direction of the battery pack housing.

15. The battery pack housing according to claim 14, wherein each of the structural beams comprises a first side plate and a second side plate arranged at intervals in a third direction, the first side plate, the second side plate, the top plate, and the bottom plate collectively define the heat dissipation channel, the second direction is a width direction of the battery pack housing, and the third direction is a length direction of the battery pack housing; or, the second direction is a length direction of the battery pack housing, and the third direction is a width direction of the battery pack housing.

16. The battery pack housing according to claim 15, wherein the structural beam further comprises a separator connected to both the first side plate and the second side plate, and the separator divides the heat dissipation channel into a plurality of sub-channels.

17. The battery pack housing according to claim 1, wherein the battery pack housing is arranged with an adhesive application hole, and each of the accommodation cavities is in a corresponding communication with the at least one adhesive application hole.

18. The battery pack housing according to claim 1, wherein the battery pack housing is a sealed housing, and an air pressure inside the accommodation cavities is lower than an air pressure outside the battery pack housing.

19. The battery pack housing according to claim 18, wherein the pressure inside the accommodation cavities is -40 KPa to -70 KPa.

20. The battery pack housing according to claim 18, wherein the battery pack housing is arranged with an exhaust orifice.

21. The battery pack housing according to claim 20, wherein the battery pack housing is arranged with a plurality of exhaust orifices, and the plurality of exhaust orifices are in a corresponding communication with the plurality of accommodation cavities respectively.

22. The battery pack housing according to claim 20, wherein the plurality of accommodation cavities are in a communication with each other, and the battery pack housing is arranged with at least one exhaust orifice that is in a communication with the accommodation cavities.

23. A battery pack, comprising the battery pack housing according to any one of claims 1 to 22.

24. An electric vehicle, comprising a vehicle body and the battery pack according to claim 23, wherein the battery pack is fixed to the vehicle body through the mounting portion.
